(19) Europäisches Patentamt
European Patent Office
Office européen des brevets

(11) **EP 1 742 212 B1**

(12) **EUROPEAN PATENT SPECIFICATION**

(45) Date of publication and mention
of the grant of the patent:
**08.04.2009 Bulletin 2009/15**

(51) Int Cl.:
***G11B 7/24*** *(2006.01)*     ***G11B 7/26*** *(2006.01)*

(21) Application number: **06116115.4**

(22) Date of filing: **27.06.2006**

(54) **Optical information recording medium and optical information reproducing apparatus**

Optisches Informationsaufzeichnungsmedium und optisches Informationswiedergabegerät

Support d'enregistrement d'informations optique et appareil de reproduction d'informations optique

(84) Designated Contracting States:
**DE FR GB**

(30) Priority: **27.06.2005 JP 2005187162**

(43) Date of publication of application:
**10.01.2007 Bulletin 2007/02**

(73) Proprietor: **NEC CORPORATION**
**Tokyo (JP)**

(72) Inventors:
• **Ohkubo, Shuichi**
**Tokyo (JP)**

• **Yamanaka, Yutaka**
**Tokyo (JP)**

(74) Representative: **Betten & Resch**
**Patentanwälte**
**Theatinerstrasse 8**
**(Fünf Höfe)**
**80333 München (DE)**

(56) References cited:
**EP-A- 1 132 903**     **EP-A- 1 524 652**
**US-A- 5 777 969**     **US-A1- 2002 060 958**
**US-A1- 2003 143 365**     **US-A1- 2004 145 999**

**Description**

**Background of the Invention**

1. Field of the Invention

The present Invention relates to an optical information recording medium and an optical information reproducing apparatus, and more particularly, a multi-layer optical information recording medium in which in which recording and reproduction operations of data from a plurality of recording layers are carried out through irradiation of a laser beam, and an optical information reproducing apparatus for the multi-layer optical information recording medium.

2. Description of the Related Art

In a rewritable optical information recording medium such as a magneto-optic disc and a phase change optical disc, a laser beam is irradiated to a recording film. A data is recorded by changing the optical characteristic of the recording film such as a magneto-optic characteristic, a reflectance, and an optical phase with the laser beam, and the data is reproduced from the laser beam which is modulated in accordance with the optical characteristic of the recording film.

In order to increase a recording capacity of the optical information recording medium, various techniques are recently tried such as a signal processing technique, a land and groove recording technique in which data is recorded on both of a portion corresponding to a tracking guide groove formed in a substrate and a portions between the guide grooves, and a super resolution reproduction which allows the reproduction of a mark smaller than an optically diffractive limit. Among those techniques, a multi-layer recording medium which has multiple recording layers, especially, a 2-layer medium which uses two recording layers can greatly increase the recording capacity. Thus, its research and development has been vigorously advanced. The capacity of the 2-layer medium has a possibility of being simply increased to two times at a maximum as compared with the single-layer recording medium. Actually, in DVD-ROM in which a red semiconductor laser beam is used, a disc having the capacity of 4.7 GB in case of a single layer and a disc having the capacity of 9 GB which is about two times are commercially available.

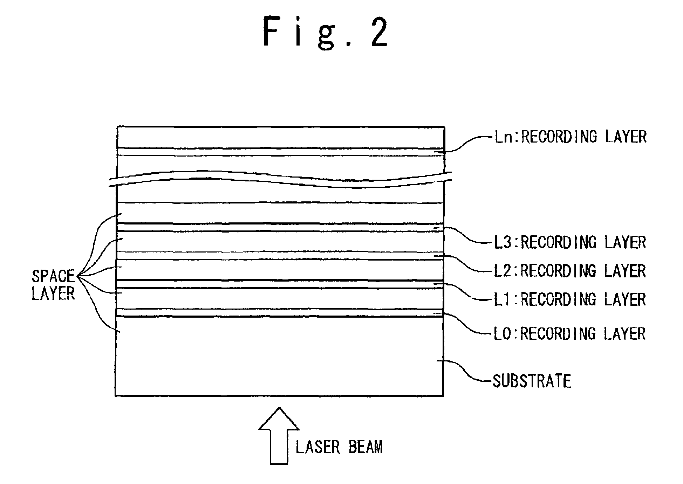

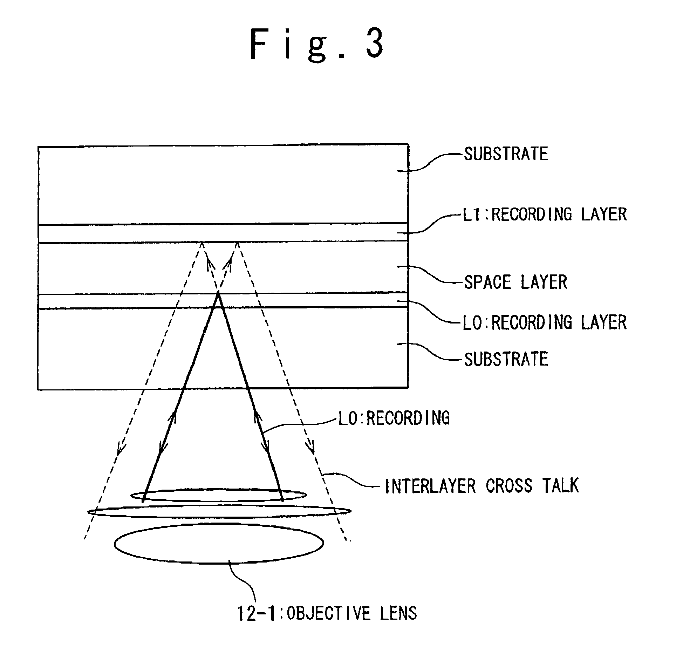

Fig. 2 is a sectional view showing a section of the multi-layer optical information recording medium. In a configuration example of Fig. 2, a plurality of recording layers (a total of (N+1) layers in the example of Fig. 2) are laminated through space layers on a substrate. In this specification, the respective recording layers are assumed to be identified in order in such a manner that the recording layer on the closest side to an input plane of the laser beam is referred to as L0, the second recording layer from the laser beam input plane is referred to as L1, and the subsequent recording layer is referred to as L2. The space layer plays a role for adhering the two recording layers and also plays a role for decreasing crosstalk between the recording layers. Here, the crosstalk between the recording layers implies a reflection light component from a different layer in a reproduction signal from a predetermined recording layer, as shown in Fig. 3. The crosstalk between the recording layers becomes a factor that decreases a modulation degree of the reproduction signal and deteriorates the quality of the reproduction signal. As the space layer is thicker, the crosstalk between the recording layers can be decreased. On the other hand, as the space layer is thicker, the spherical aberration of a focused beam that is used to record or reproduce data is increased to deteriorate the quality of the reproduction signal. Thus, the thickness of the space layer is required to be optimized by considering the tradeoff of the decrease in the crosstalk between the recording layers and the increase in the spherical aberration.

In conjunction with the above description, a method of manufacturing a multi-layer optical recording medium is disclosed in Japanese Laid Open Patent Publication (JP-P2003-77191A). In the conventional manufacturing method of the multi-layer optical recording medium, a first optical recording plane is formed on a substrate. A light transmitting intermediate layer is formed on a first optical recording plane through at least twice of a laminating step. Then, a second optical recording plane is formed on the light transmitting intermediate layer.

Also, a method of manufacturing an optical recording medium is disclosed in Japanese Laid Open Patent Publication (JP-P2003-296978A). In the conventional manufacturing method of the optical recording medium, a substrate is produced to have a first minute unevenness. A first optical recording layer is formed on the substrate, an ultraviolet-ray hardening resin layer is formed on the first optical recording layer, and the resin layer is hardened by irradiating the ultraviolet rays. Then, a stamper having a minute unevenness is pushed against the surface of the hardened resin layer to transcript a second unevenness shape onto the surface of the hardened resin layer. Subsequently, a second optical recording layer is formed on the second unevenness shape of the hardened resin layer, and a protection layer is formed on the second optical recording layer.

Also, a method of manufacturing an optical information recording medium is disclosed in Japanese Laid Open Patent Publication (JP-P2004-220750A). In this conventional manufacturing method of the optical information recording medium, a substrate having a central hole and having a recording layer on a main surface is prepared, and the central hole is blocked up with a hole stoppage member. Resin material is dropped from above the central hole while turning the substrate around the central hole to apply the resin material onto the recording layer by a spin coating method. The hole stoppage member is removed from the central hole, a stamper having a ditch or an unevenness pit is prepared and fit to oppose to the resin material on the substrate. An intermediate layer is formed of the resin material through the hardening the resin material, and the stamper is removed from the substrate. Thus, the recording layer is formed on the surface of the intermediate layer to correspond to the ditch or unevenness pit of the stamper.

US 2002/0060958 A1 on which the preamble of claim 1 is based discloses a thickness servo system using optical aberrations. The system includes an objective lens facing a recording layer covered with a transparent layer accompanying thickness irregularity, a laser source for supplying a laser beam to the recording layer through the objective lens and transparent layer, aphotodetector for detecting the laser beam reflected by the recording layer through the transparent layrt and objective lens, and a thickness irregularity correction section which is placed in a laser beam optical path between the laser source and the recording layer to correct an optical aberration of the objective lens due to the thickness irregularity of the transparent layer. In this system, the photodetector detects an aberration amount corresponding to thickness irregularity, and the thickness irregularity correction section operates to minimize the detected aberration amount. The thickness irregularity of the transparent layer can also be calculated from the detected aberration amount.

US 2004/0145999 A1 discloses an initialization method of an optical recording medium having a plurality of optical recording layers capable of reducing initialization unevenness due to light interference caused at the time of initialization without deteriorating information recording/reproducing signal characteristics of the optical recording layers.

EP 1 132 903 A2 discloses an information recording medium which includes a substrate and one or a plurality of layers formed on the substrate, wherein at least one of the layers is formed by mixing a base material and a hard material which has a predetermined thickness and determines a predetermined thickness of the layer.

**Summary of the Invention**

It is an object of the present invention to provide a multi-layer optical information recording medium from which a reproduction signal having excellent quality can be obtained, and an information reproducing apparatus with said recording medium.

According to the invention, this object is achieved by the subject-matter of claim 1. Advantageous embodiments are defined in dependent claims.

In an aspect of the present invention, there is provided with an optical information recording medium to which a recording operation or reproducing operation of information is carried out by irradiating a laser beam. The optical information recording medium includes two recording layers provided through a space layer. An absolute value of a change $\Delta d$ of a film thickness of the space layer for every unit length in a circumferential direction is equal to or less than a predetermined value which is determined based on a wavelength of the laser beam, a refractive index of the space layer in the wavelength $\lambda$ and one of a line velocity of the laser beam and the shortest pit length in a pit sequence recorded in each of the recording layers.

Here, when the wavelength of the laser beam is $\lambda$, the refractive index of the space layer in the wavelength $\lambda$ ($\mu$m) is n, and a standard line velocity of the optical information recording medium is v (m/s), the change $\Delta d$ of the film thickness of the space layer per 1 mm in the circumferential direction is $|\Delta d| \leq (10\lambda/n/v)$.

Also, when the wavelength of the laser beam is $\lambda$, the refractive index of the space layer in the wavelength $\lambda$ ($\mu$m) is n, and the shortest pit length of the pit sequence recorded on each of the recording layers of the optical information recording medium is L ($\mu$m), the change $\Delta d$ of the film thickness of the space layer per 1 mm in the circumferential direction is $|\Delta d| \leq 0.309\lambda/n/L$.

Also, the film thickness of the space layer is in a range of 20 $\mu$m to 40 $\mu$m.

In another aspect of the present invention, there is provided with an optical information recording medium to which a recording operation or reproducing operation of information is carried out by irradiating a laser beam. The optical information recording medium includes N recording layers (N is a natural number more than 2); and (N-1) space layers, each of which is provided between every adjacent two of the N recording layers. An absolute value of a change $\Delta d$ of a film thickness of each of the N space layers for every unit length in a circumferential direction is equal to or less than a predetermined value which is determined based on a wavelength $\lambda$ of the laser beam, a refractive index of the space layer in the wavelength $\lambda$ and one of a line velocity of the laser beam and the shortest pit length in a pit sequence recorded in each of the recording layers.

Here, when the wavelength of the laser beam is A ($\mu$m), the refractive index of the space layer in the wavelength $\lambda$ ($\mu$m) is n, and a standard line velocity of the optical information recording medium is v (m/s), the change $\Delta d$ of the film thickness of each of the n space layers per 1 mm in the circumferential direction is $|\Delta d| \leq (5\lambda/n/v)$.

Also, when the wavelength of the laser beam is $\lambda$ ($\mu$m), the refractive index of the space layer in the wavelength $\lambda$ ($\mu$m) is n, and the shortest pit length of the pit sequence recorded on each of the recording layers of the optical information recording medium is L ($\mu$m), the change $\Delta d$ of the film thickness of the space layer per 1 mm in the circumferential direction is $|\Delta d| \leq 0.154\lambda/n/L$.

In another aspect of the present invention, there is provided with an optical information recording medium to which a recording operation or reproducing operation of information is carried out by irradiating a laser beam. The optical information recording medium includes M recording layer (M is a natural number more than 2); and (M-1) space layers, each of which is provided between every adjacent two of the N recording layers. When a film thickness of N-th one ($1 \leq N \leq M-2$) of the (M-1) space layers from a laser incidence plane is $d_N$, a film thickness of (N+1)-th one of the (M-1) space layers is $d_{N+1}$, and a difference in the film thickness of the space layer is DS = $|d_N - d_{N+1}|$, the absolute value of the change $\Delta DS$ of the space film thickness difference DS for every unit length in a circumferential direction is equal to or less than a predetermined value.

Here, when the wavelength of the laser beam is $\lambda$ ($\mu$m), the refractive index of each of the N-th and (N+1)-th space layers in the wavelength $\lambda$ ($\mu$m) is n, and a standard line velocity of the optical information recording medium is v (m/s), the change $\Delta d$ of the film thickness of the space layer per 1 mm in the circumferential direction is $|\Delta d| \leq (5\lambda/n/v)$.

Also, when the wavelength of the laser beam is $\lambda$ ($\mu$m), the refractive index of each of the N-th and (N+1)-th space layers in the wavelength $\lambda$ ($\mu$m) is n, and the shortest pit length of pit strings recorded on each recording layer of the optical information recording medium is L ($\mu$m), the change $\Delta DS$ of the film thickness DS of the space layer per 1 mm in the circumferential direction is $|\Delta DS| \leq 0.154\lambda/n/L$.

Also, the wavelength of the laser beam is in a range of 380 to 430 nm and the laser beam collected by an object lens with an aperture of 0.6 to 0.7 is irradiated to the optical information recording medium.

Also, the information which is ETM (Eight to Twelve Modulation) modulated is recorded on the optical information recording medium.

Also, in still another aspect of the present invention, there is provided with an optical information reproducing apparatus which carries out reproduction of information by using the above optical information recording medium. The optical information reproducing apparatus includes an optical head section configured to irradiate the laser beam to the optical information recording medium and to generate a reproduction signal from light reflected from the optical information recording medium; an amplifier section configured to amplify the reproduction signal; and a restraint section configured to restrain a change of the reproduction signal in a KHz band.

Here, the restraint section includes a high-pass filter configured to filter a signal outputted from the amplifier section, and a cutoff frequency of the high-pass filter is equal to or higher than 3 KHz and equal to or lower than 20 KHz.

## Brief Description of the Drawings

Figs. 1A and 1B are views showing a reproduction signal of an optical information recording medium according to the present invention;
Fig. 2 is a diagram showing an example of a configuration of a multi-layer optical information recording medium;
Fig. 3 is a diagram explaining inter-layer crosstalk in the multi-layer optical information recording medium;
Fig. 4 is a block diagram schematically showing a configuration of an optical information reproducing apparatus according to the present invention;
Figs. 5A and 5B are graphs showing examples of a space layer film thickness distribution and a space layer thickness variation per unit length; and
Fig. 6 is a diagram showing optical interference generated in reproduction of data from an optical information recording medium having three or more recording layers.

## Description of the Preferred Embodiments

Hereinafter, an optical information reproducing apparatus for using an optical information recording medium according to the present invention will be described in detail with reference to the attached drawings. The inventor of this application discovered that the quality of a reproduction signal from the multi-layer medium greatly depended on not only the thickness of a space layer but also a variation in its thickness. The present invention is based on this discovery.

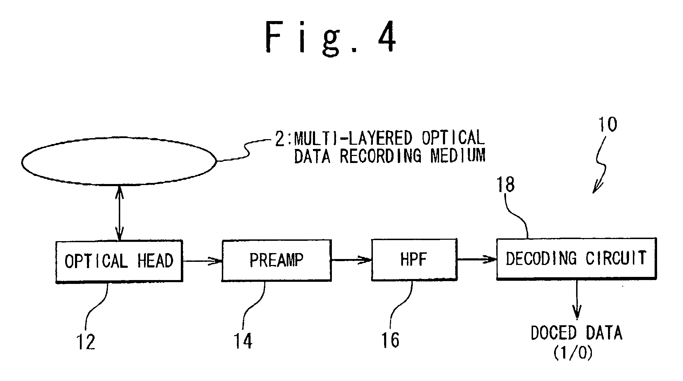

Fig. 4 is a block diagram showing a configuration of the optical information reproducing apparatus 10. With reference to Fig, 4, the optical information reproducing apparatus 10 includes an optical head section 12, a pre-amplifier 14, a high pass filter (HPF) 16 and a decoding circuit 18. In Fig. 4, other configurations such as a rotation system for rotating an optical information recording medium 2, a serve control system that are known to one skilled in the art are omitted.

The optical head section 12 has the configuration known to the one skilled in the art and includes a laser diode (not shown) and an objective lens 12-1 (Fig. 3). A laser beam outputted and focused from the laser diode is irradiated to the multi-layer optical information recording medium 2. The optical head section 12 generates a reproduction signal from a reflection laser beam from the multi-layer optical information recording medium 2. The reproduction signal from the optical information recording medium is sent to the decoding circuit 18 through the pre-amplifier 14 for increasing a signal amplitude and the high pass filter 16 for suppressing noise of a low frequency component contained in the reproduction signal. The decoding circuit 18 is a circuit for converting the reproduction signal into a binary value. The decoding circuit 18 includes an AGC (automatic gain control) circuit for making the signal amplitude constant and a PLL circuit for clock signal extraction and the like (all of them are not shown). The decoding circuit 18 includes a comparator (not shown) when the binary value conversion is executed by using a level slice method, as known to the one skilled in the art, and also includes a PR equalizing circuit and a Viterbi detector (not shown) when the binary value conversion is executed by using a PRML method.

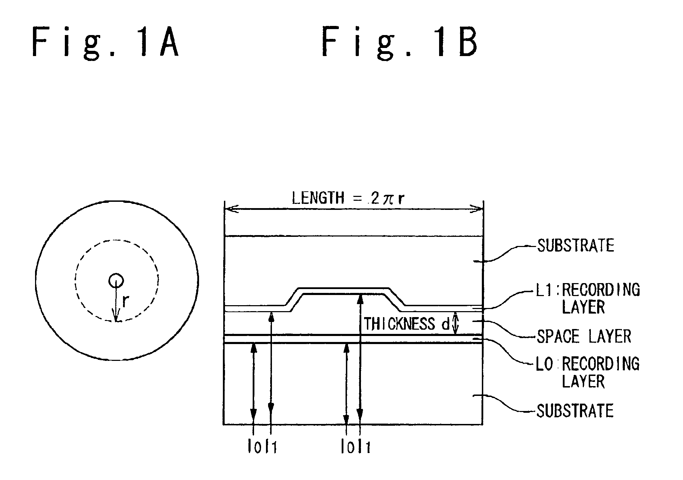

As an example in which the data is reproduced from a 2-layex optical information recording medium as the multi-layer optical information recording medium 2, the reproduction of a data signal from an L0 recording layer will be described in detail with reference to Figs. 1A and 1B. When the data should be reproduced from the L0 recording layer at a position of a radius r from a center as shown in Fig. 1A, the focused laser beam is irradiated from the optical head section 12 and is reflected on the L0 recording layer and outputted as an optical reproduction signal I0 as shown in Fig. 1B. Also, the focused laser beam passes through the L0 recording layer and is reflected on an L1 recording layer and then outputted as an optical reproduction signal I1 after passing through the L0 recording layer again. The optical reproduction signal I1 reflected on the L1 recording layer functions as inter-layer crosstalk. The optical reproduction signal It containing the signals I0 and I1 is detected by a photo detector (not shown) of the optical head section 12. The optical reproduction signals I0 and I1 are beams having the spreads. However, they are indicated as straight lines in Fig. 1B, for the purpose of simple illustration.

The inventor of this application discovered that optical interference between the optical reproduction signals I0 and I1 caused the severe deterioration in the quality of the optical reproduction signal. An electric field amplitude of the optical reproduction signal I0 on the photo detector is defined as R0ei$\theta$, and an electric field amplitude of the optical reproduction signal I1 is defined as R1ei($\theta$+$\Delta\Phi$). Then, when the optical interference is caused between the optical reproduction signals I0 and I1, the optical reproduction signal It after the interference is represented as

$$It = R02 + R12 + 2R0R1cos(\Delta\Phi).$$

Here, a wavelength of the laser beam used to reproduce the data is defined as $\lambda$, a refractive index of a space layer is defined as n, and a thickness of the space layer is defined as d. At this time, $\Delta\Phi$ is represented as $\Delta\Phi = 2\Pi\times2nd/\lambda$. The variation in the thickness of the space layer brings about the variation in $\Delta\phi$ and results in the variation in the optical reproduction signal It. The reproduction of the data from the optical information recording medium 2 is usually carried out along a pit string or guide groove formed in a concentric circle or a spiral shape formed on the optical information recording medium. Thus, when a film thickness distribution exists in a circumferential direction on the circle of the radius r shown in Fig. 1A, the variation in a light quantity occurs in the reproduction signal from the optical information recording medium 2. Thus, the film thickness distribution in the circumferential direction becomes one factor of the increase in an error rate when the data is reproduced. The space layer is usually made of ultraviolet hardening resin, and its refractive index (in the vicinity of a wavelength 400 nm) is about 1.5 to 1.6. It should be noted that the beams of the reproduction signals I0 and I1 are different in area and the optical phases of the reflection beams are not completely uniform. Therefore, the interference represented by the foregoing equation is not actually generated.

However, the inventor of this application discovered that the optical interference resulting from the film thickness variation in the space layer caused the light quantity variation of about 5 to 15 %, with respect to the total reception light reflection light quantity, and the signal quality was deteriorated.

An allowable film thickness variation in the circumferential direction can be estimated as following. It is supposed that the wavelength of the laser beam is $\lambda$ ($\mu$m), a refractive index of the space layer in the wavelength $\lambda$ is n, a line velocity of the laser beam when the data is reproduced is v (m/s), and a variation in the space layer thickness per 1, mm in the circumferential direction is $\Delta$d. In this case, if $\Delta$d = 0.5$\lambda$/n/v, $\Delta\Phi$ is changed by $2\pi$ in a range of v (mm) in the circumferential direction, and the light quantity variation of 1 KHz is caused (a time required when a beam moves over a length of v (mm) in the velocity v (m/s) is 1 ms, and a frequency of the light quantity variation with 1 ms as one period is 1 KHz). Similarly, if $\Delta$d = 2.5$\lambda$/n/v, the variation in 5 KHz is caused, and if $\Delta$d = 10$\lambda$/n/v, the variation of 20 KHz is caused. Here, the film thickness variation per 1mm (corresponding to a film thickness variation inclination) is noticed. However, in usual space layer forming methods such as ultraviolet hardening resin layer formation through a spin coating and transparent sheet pasting by use of an adhesive, the film thickness is not drastically varied in a range shorter than 1 mm in almost cases. Thus, it is adequate to consider the film thickness variation inclination per 1 mm.

The variation of a KHz band can be suppressed by the high pass filter 16. However, the signal recorded on the optical information recording medium 2 also contains a signal component in the KHz band. Thus, if a cutoff frequency of the high pass filter 16 is set to be excessively high, the reproduction signal itself is deteriorated. As described in the following examples, when the cutoff frequency of the high pass filter 16 is set to be higher than 20 KHz, the detection performance is deteriorated. Accordingly, the absolute value of the film thickness variation $\Delta d$ per the length of 1 mm in the circumferential direction must be $10\lambda/n/v$ or less. Moreover, the high pass filter 16 of the cutoff frequency of 20 KHz cannot perfectly remove the variation component to 20 KHz. Therefore, preferably, it is equal to or less than $5\lambda/n/v$ corresponding to the variation 10 KHz, and more preferably, it is equal to or less than $2.5\lambda/n/v$ corresponding to 5 KHz or less.

It is possible to use an offset canceller by setting a variation in an average light reception level as an error signal and suppressing the variation through a closed loop, in addition to the high pass filter 16, in order to suppress the variation of the KHz band. Also, both of the high pass filter and the offset canceller may be used at the same time.


[First Embodiment]


A polycarbonate (PC) having the thickness of 0.6 mm is used for a substrate. Then, layers of ZnS-SiO$_2$, GeCrN, GeSbTe, GeCrN, ZnS-SiO$_2$, Ag alloy and ZnS-SiO$_2$ are laminated on the PC substrate in this order, and the L0 recording layer is completed. The substrate on which the guide groove for the tracking serve has been formed is used for the PC substrate. The pitch of the guide groove is 0.4 $\mu$m, and the depth is 30 nm. Layers of Ag alloy, ZnS-SiO$_2$, GeSbTe, and ZnS-SiO$_2$ are laminated on a PC substrate in this order, and the L1 recording layer is completed. A 2-layer medium is formed by adhering the L0 recording layer and the L1 recording layer to each other by use of the ultraviolet hardening resin having the refractive index of n = 1.58 in the wavelength of about 400 nm as a spacer layer. The thickness of the space layer is about 28 $\mu$m as an average value. The five 2-layer media having the same configuration were formed, and the relation between the film thickness variation in the space layer and the record/ reproduction property was examined. When the five media were formed, the adhesion condition was intentionally changed such that the film thickness distribution of the disc in the circumferential direction was great.

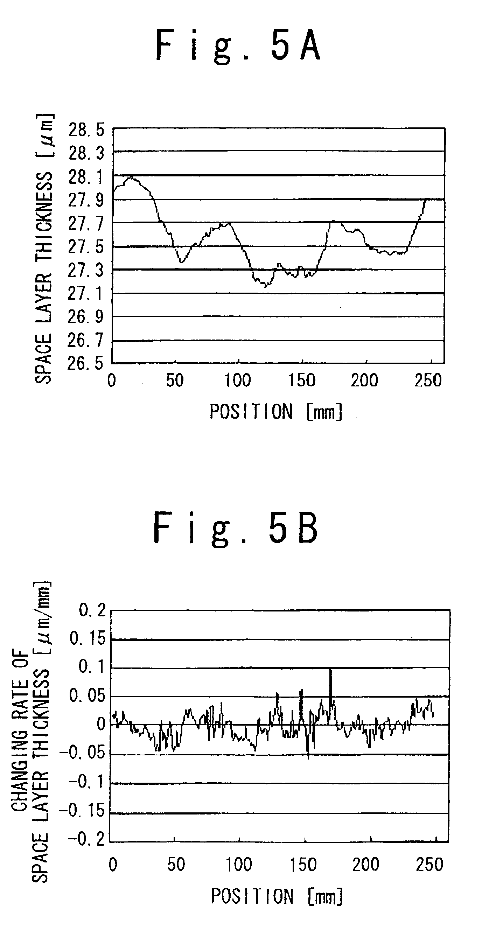

Figs. 5A and 5B show an example of the film thickness distribution of the space layer in the circumferential direction. In this measurement example, at a radius of 39.5 mm (one round of 248.1 mm), a film thickness interference indicator was used to measure the space layer thickness for every 2 degrees (for each 1.379 mm), in the circumferential direction. Based on these measurement results, the film thickness variation and the film thickness variation inclination per 1 mm in circumferential direction are calculated.

The record/reproduction evaluation was carried out by using an optical head with an objective lens having the aperture (NA) of 0.65. At this time, the input surface of the laser beam was set on the side of the L0 recording layer. The line velocity at the time of the record/reproduction was set to 661 m/s, and the data subjected to an ETM (Eight to Twelve Modulation) modulation ("Eight to Twelve Modulation Code for High Density Optical Disk", the reproduction signal ISOM' 03 Technical Digest P.160-161) was recorded at the clock frequency of 64.8 MHz (the shortest mark 2T: 0.204 [$\mu$m]). The reproduction was carried out by setting the cutoff frequency of the high pass filter 16 to 3 kHz and combining PR (1, 2, 2, 2, 1) equalization and Viterbi detection.

The following table 1 shows the relation between the film thickness variation (the film thickness variation inclination) per circumferential direction 1 mm of the space layer and the bit error rate at the time of the recording to and reproduction from the L0 recording layer. The film thickness variation shown in the table 1 is the value defined in the maximum value of the film thickness variation absolute value in one cycle. The table 1 shows the result of the formed five two-layer media.

**Table 1**

| Reproduction Signal ID | Film Thickness Variation ($\mu$m/mm) | Bit Error Rate |
|---|---|---|
| 1 | 0.02 | $8 \times 10^{-6}$ |
| 2 | 0.03 | $8.5 \times 10^{-6}$ |
| 3 | 0.1 | $3.1 \times 10^{-5}$ |
| 4 | 0.2 | $7 \times 10^{-5}$ |
| 5 | 0.4 | $3 \times 10^{-4}$ |

From the table 1, it could be seen that the bit error rate is extremely increased at the media 4 or media 5 in which the film thickness variation per 1 mm is great. In the signal variation frequency of 1 KHz in the evaluation condition of this embodiment, the film thickness variation per 1 mm is $\Delta d = 0.5 \times 0.405/1.59/6.61 = 0.02$ $\mu$m. Thus, in the medium 4 or medium 5, the signal variation between 10 KHz and 20 KHz is caused (the signal variation caused due to optical interference between the L0 recording layer reflection light and the L1 recording layer reflection light). It is considered that this variation caused the increase in the bit error rate. In the medium 5 corresponding to the variation frequency of 20 KHz, the bit error rate reaches $3\times10^{-4}$ which is the allowable limit of an apparatus stable operation. Thus, it could be understood that the variation frequency is required to be set to 20 KHz or less. Moreover, if the variation frequency can be preferably set to 10 KHz or less, more preferably to 5 KHz or less, the data can be reproduced at the sufficiently low error rate.

[Second Embodiment]

A relation between the cutoff frequency of the high pass filter 16 and the bit error rate is examined by using the medium 1 formed in the first embodiment. The record/reproduction conditions except for the cutoff frequency of the high pass filter 16 were set to those of the first embodiment. In addition, the bit error rate was measured by changing the cutoff frequency of the high pass filter 16. The following table 2 shows the measurement result. From the table 2, it could be seen that the bit error rate is gradually increased when the cutoff frequency of the high pass filter 16 is set to be higher than 20 KHz. It may be considered that the increase in the bit error rate results from the fact that a high frequency (20 KHz or higher) component contained in the ETM-modulated signal is deteriorated by the high pass filter. In this way, the high pass filter effectively functions in order to suppress the signal variation caused due to the optical interference. However, the upper limit of the cutoff frequency is desired to be set to about 20 KHz.

**Table 2**

| High Pass Filter Cutoff (KHz) | Bit Error Rate |
|---|---|
| 1 | $9\times10^{-6}$ |
| 3 | $8\times10^{-6}$ |
| 10 | $7.3\times10^{-6}$ |
| 20 | $9.3\times10^{-6}$ |
| 30 | $2\times10^{-5}$ |

The upper limit of $\Delta d$ is defined by using the line velocity as a parameter. However, a pit length of a pit recorded on the optical information recording medium can be used to define it. When the line velocity at the time of the reproduction is defined as v (m/s), the wavelength of the laser beam is defined as $\lambda$ ($\mu$m), the refractive index of the space layer in the wavelength $\lambda$ is defined as n and the film thickness variation of the space layer per 1 mm in a circumferential direction is defined as $\Delta d$ ($\mu$m), a frequency f (KHz) of the signal variation caused due to the film thickness variation of the space layer is represented by $f = 2vn\Delta d/\lambda$. The length when the beam is advanced for 1 ms (corresponding to the cycle of 1 KHz) at the line velocity of v (m/s) is v (mm). Since the film thickness variation per 1 mm in the circumferential direction is $\Delta d$ ($\mu$m), the film thickness variation quantity generated in the range of v (mm) is $v\Delta d$ ($\mu$m). The optical path difference is $2v\Delta d$ that is two times. A multiple value of the wavelength $\lambda$/n to this optical path difference is equivalent to the frequency of the signal variation.

On the other hand, when the line velocity is defined as v (m/s) and the shortest pit length in a pit string recorded on the optical information recording medium is defined as L ($\mu$m), a frequency fs of the shortest pit length is fs = 0.5v/L (MHz). In the first embodiment, fs (MHz) = 16.2 MHz. When the allowable variation frequency fc (KHz) is set as 20 KNz, fs/fc = 16.2/20. Accordingly, fc = 20fs/16.2 = 10v/(16.2L). Thus, in order satisfy $f \leq fc$, it is adequate to satisfy the condition of $2vn\Delta d/\lambda \leq (10v/1.6.2/L)$. That is, if $\Delta d \leq 0.309\lambda/n/L$, the variation frequency is 20 KHz or less, and if $\Delta d \leq 0.154\lambda/n/L$, the variation frequency is 10 KHz or less.

[Third Embodiment]

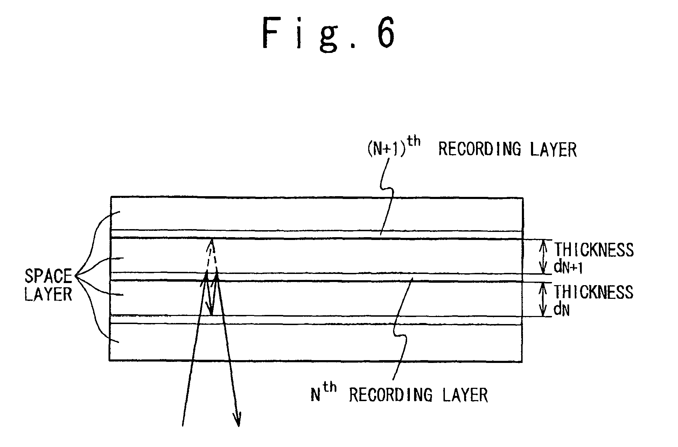

In the first and second embodiments, a case where the recording medium has the two recording layers has been described. However, when the recording medium has three or more recording layers, the optical interference is not caused by the variation in the single space layer, but by variation of the two space layers. That is, in case that the recording medium has three recording layers or more, new interference is caused in addition to the interference caused by the reflection beam between the layers adjacent to each other, similarly to the case of the two recording layers, as shown in Fig. 6. When the two or more recording layers exist on the input side of the target recording medium to which the data is recorded or from which the data is reproduced, the interference is caused as the result in which the laser beam is reflected on the recording layer one layer before, and is reflected on the rear of the recording layer two layers before, and is again reflected on the foregoing layer one layer before, and is returned to the optical head section 12.

If the thicknesses of the respective space layers are substantially equal, as for this interference light, the optical path length from the input surface is substantially equal to that of the targeted recording layer. Thus, even in the case of a small light quantity, the interference with the signal light corresponding to the information to be reproduced from the target recording layer becomes severe. Thus, its influence cannot be ignored. The difference between the two optical path lengths which contributes to the interference in this case is proportional to $|d_N - d_{N+1}|$ where the film thickness of the N-th space layer when it is counted from the optical input side is defined as $d_N$ and the film thickness of the (N+1)-th space layer is defined as $d_{N+1}$. Actually, this attainment is difficult. However, if the film thickness variation quantities in the circumferential directions of the respective space layers are perfectly equal, even if the film thickness itself is tentatively varied, the variation in the interference is never induced. Actually, since the film thickness variation in the circumferential direction is different for each space layer, a difference DS of the thickness between the N-th space layer and the (N+1)-th space layer is required to be DS = $|d_N - d_{N+2}|$, and a variation $\Delta$DS per circumferential direction 1mm of DS is required to be 10$\lambda$/n/v or less, preferably 5$\lambda$/n/v, and further preferably 2.5$\lambda$/n/v. If the film thickness variation itself of each space layer is suppressed to the half of the variation, the upper limit of the variation as mentioned above is automatically satisfied.

In this embodiment, the case of 28 $\mu$m as the thickness of the space layer has been described. However, the thickness of the space layer may be within the range between 20 $\mu$m and 40 $\mu$m, This is because if it is thinner than 20 $\mu$m, the deterioration in the signal quality caused by the inter-layer crosstalk cannot be ignored, and if it is thicker than 40 $\mu$m, the spherical aberration becomes greater, and the signal quality is deteriorated.

Also, in this embodiment, only the phase change recording medium has been described as the optical information recording medium. However, the effect of the present invention is similar in an optical information recording medium of a write-once read-many type and an optical information recording medium dedicated to reproduction.

Also, in this specification, only 0.65 has been described as the aperture NA of the objective lens in the optical head section 12. However, it is possible to use the optical head in the range between 0.6 and 0.7. In the aperture NA smaller than 0.6, it is impossible to reduce a beam diameter. Thus, it is difficult to carry out a high density recording. Also, in the aperture NA greater than 0.7, the allowable margin for a tilt of a disc when the laser beam from the substrate side is inputted to carry out the recording/reproducing operation is extremely narrow, and this is not practical.

If the aperture NA is greater than 0.7, the focus depth of the light collection beam becomes shallow. If the space layer is equal to or greater than 20 $\mu$m, the influence of the optical interference becomes at the substantially ignorable level. Thus, the case where the present invention functions effectively is the case when the optical head in which the wavelength is between 380 and 430 nm and the aperture of the objective lens is NA = 0.6 to 0.7 is used to carry out the record or reproduction of the multi-layer optical information recording medium.

By using the present invention, the reproduction signal having the excellent quality can be obtained from the multi-layer media. Consequently, it is possible to provide a large capacity of the optical information recording medium.

In summary an embodiment of the invention can be described as follows:

In an optical information recording medium to which a recording operation or reproducing operation of information is carried out by irradiating a laser beam, there are provided with two recording layers provided through a space layer. An absolute value of a change $\Delta$d of a film thickness of the space layer for every unit length in a circumferential direction is equal to or less than a predetermined value which is determined based on a wavelength of the laser beam, a refractive index of the space layer in the wavelength $\lambda$ and one of a line velocity of the laser beam and the shortest pit length in a pit sequence recorded in each of the recording layers.

**Claims**

1. An optical information recording medium (2) to which a recording operation or reproducing operation of information is carried out at linear velocity of v (m/s) by irradiating a laser beam with a wavelength of $\lambda$, comprising:

   M recording layers (L0, ... , LM-1) wherein M is a natural number more than 1; and
   (M-1) space layers provided between every adjacent two of said M recording layers (L0, ...,LM-1), **characterized in that**
   a thickness of each of said (M-1) space layers satisfies a condition that the absolute value $|\Delta$d$|$ of thickness change per 1 mm in a circumferential direction is equal to or less than 0.4 $\mu$m/mm, and $\Delta$d is determined based on a difference of said thickness between any two consecutive points in a circumferential direction.

2. The optical information recording medium (2) according to claim 1, wherein the film thickness of each of said (M-1) space layers is in a range of 20 $\mu$m to 40 $\mu$m.

**3.** The optical information recording medium (2) according to claim 1 or 2, wherein M ≥ 3, and
when a film thickness of N-th one (1 ≤ N ≤ M-2) of said (M-1) space layers from a laser incidence plane is $d_N$, a film thickness of (N+1)-th one of said (M-1) space layers is $d_{N+i}$, and a difference in the film thickness of the space layer is DS = $|d_N - d_{N+i}|$, the absolute value of a change ΔDS of said space layer film thickness difference DS between any two consecutive points per 1 mm in a circumferential direction is equal to or less than 0.4 μm/mm.

**4.** The optical information recording medium (2) according to any of claims 1 to 3, wherein the wavelength λ of said laser beam is in a range of 380 to 430 nm and said laser beam collected by an object lens (12-1) with an aperture of 0.6 to 0.7 is irradiated to said optical information recording medium.

**5.** The optical information recording medium (2) according to claims 1 to 4 wherein said information which is ETM (Eight to Twelve Modulation) modulated is recorded on said optical information recording medium.

**6.** An optical information reproducing apparatus (10) which carries out reproduction of information, comprising:

an optical information recording medium according to any of the claims 1 to 5;
an optical head section (12) configured to irradiate said laser beam to said optical information recording medium (2) and to generate a reproduction signal from light reflected from said optical information recording medium (2);
an amplifier section (14) configured to amplify said reproduction signal; and
a restraint means (16) for restraining a change of said reproduction signal in a kHz band.

**7.** The optical information reproducing apparatus (10) according to claim 6, wherein said restraint means comprises a high-pass filter (16) configured to filter a signal outputted from said amplifier section, and
a cutoff frequency of said high-pass filter is equal to or higher than 3 kHz and equal to or lower than 20 kHz.

**Patentansprüche**

**1.** Optisches Informationsaufzeichnungsmedium (2), auf welchem eine Aufzeichnungsoperation oder Wiedergabeoperation von Information bei linearer Geschwindigkeit von v (m/s) durch Einstrahlen eines Laserstrahls mit einer Wellenlänge λ ausgeführt wird, umfassend:

M Aufzeichnungsschichten (L0, ..., LM-1), wobei M eine natürliche Zahl größer als 1 ist; und
(M-1) Zwischenschichten, die zwischen jeweils zwei benachbarten der M Aufzeichnungsschichten (L0, .... LM-1) bereitgestellt sind, **dadurch gekennzeichnet, dass**
eine Dicke von jeder der (M-1) Zwischenschichten eine Bedingung erfüllt, dass der Absolutwert |Δd| der Dickenänderung pro 1 mm in einer Umlaufrichtung gleich oder weniger als 0,4 μm/mm ist, und wobei Δd basierend auf einer Änderung der Dicke zwischen zwei beliebigen aufeinanderfolgenden Punkten in einer Umlaufrichtung bestimmt ist.

**2.** Optisches Informationsaufzeichnungsmedium (2) nach Anspruch 1, wobei die Filmdicke von jeder der (M-1) Zwischenschichten in einem Bereich von 20 μm bis 40 μm liegt.

**3.** Optisches Informationsaufzeichnungsmedium (2) nach Anspruch 1 oder 2, wobei M ≥ 3 ist, und wobei, wenn eine Schichtdicke der N-ten (1 ≤ N ≤ M-2) von den (M-1) Zwischenschichten von einer Lasereinfallsebene $d_N$ ist, eine Schichtdicke der (N+1)-ten von den (M-1) Zwischenschichten $d_{N+i}$ ist und eine Differenz in der Schichtdicke der Zwischenschicht DS = $|d_N - d_{N+i}|$ ist, der Absolutwert einer Änderung ΔDS des Zwischenschicht-Schichtdickenunterschieds DS zwischen zwei beliebigen aufeinanderfolgenden Punkten pro 1 mm in einer Umlaufrichtung gleich oder geringer als 0,4 μm/mm ist.

**4.** Optisches Informationsaufzeichnungsmedium (2) nach einem der Ansprüche 1 bis 3. wobei die Wellenlänge λ des Laserstrahls in einem Bereich von 380 bis 430 nm liegt, und wobei der durch eine Objektlinse (12-1) mit einer Apertur von 0,6 bis 0,7 gebündelte Laserstrahl auf das optische Informationsaufzeichnungsmedium eingestrahlt wird.

**5.** Optisches Informationsaufzeichnungsmedium (2) nach den Ansprüchen 1 bis 4, wobei die Information, welche ETM (Acht-auf-Zwölf-Modulation) moduliert ist, auf das optische Informationsaufzeichnungsmedium aufgezeichnet wird.

**6.** Optische Informationswiedergabevorrichtung (10), welche die Wiedergabe von Information ausführt, umfassend:

ein optisches Informationsaufzeichnungsmedium nach einem der Ansprüche 1 bis 5;
einen optischen Kopfabschnitt (12), der dazu eingerichtet ist, den Laserstrahl auf das optische Informationsaufzeichnungsmedium (2) einzustrahlen und ein Wiedergabesignal aus dem von dem optischen Informationsaufaeichnungsmedium (2) reflektierten Licht zu erzeugen;
einen Verstärkerabschnitt (14), der dazu eingerichtet ist, das Wiedergabesignal zu verstärken; und
eine Beschränkungseinrichtung (16) zum Beschränken einer Änderung des Wiedergabesignals in einem kHz-Band.

7.  Optische Informationswiedergabevorrichtung (10) nach Anspruch 6, wobei die Beschränkungseinrichtung ein Hochpaßfilter (16) umfaßt, das dazu eingerichtet ist, ein von dem Verstärkerabschnitt ausgegebenes Signal zu filtern, und wobei
eine Grenzfrequenz des Hochpaßfilters gleich oder größer als 3 kHz und gleich oder geringer als 20 kHz ist.

**Revendications**

1.  Support d'enregistrement d'informations optique (2) sur lequel est réalisée une opération d'enregistrement ou opération de reproduction d'informations à une vitesse linéaire v (m/s) par l'irradiation d'un faisceau laser ayant une longueur d'onde λ, comprenant :

    M couches d'enregistrement (L0, ..., LM - 1) où M est un entier naturel supérieur à 1 ; et
    (M - 1) couches d'espacement disposées entre chaque couches adjacentes desdites M couches d'enregistrement (L0, ..., LM - 1), **caractérisé en ce que**
    une épaisseur de chacune desdites (M - 1) couches d'espacement satisfait la condition que la valeur absolue $|\Delta d|$ de la variation d'épaisseur par 1 mm dans une direction circonférentielle est égale ou inférieure à 0,4 $\mu$m/mm, et $\Delta d$ est déterminé en fonction d'une différence de ladite épaisseur entre deux points consécutifs quelconques dans une direction circonférentielle.

2.  Support d'enregistrement d'informations optique (2) selon la revendication 1, dans lequel l'épaisseur de film de chacune desdites (M - 1) couches d'espacement est dans une plage allant de 20 $\mu$m à 40 $\mu$m.

3.  Support d'enregistrement d'informations optique (2) selon la revendication 1 ou 2, dans lequel $M \geq 3$, et
    dans lequel lorsqu'une épaisseur de film d'une $N^{ième}$ ($1 \leq N \leq M - 2$) desdites (M - 1) couches d'espacement à partir d'un plan d'incidence laser est $d_N$, une épaisseur de film d'une $(N + 1)^{ième}$ desdites (M - 1) couches d'espacement est $d_{N + 1}$, et une différence d'épaisseur de film de la couche spatiale est DS = $|d_N - d_{N + 1}|$, la valeur absolue d' un changement $\Delta$DS de ladite différence d'épaisseur de film de couches d'espacement DS entre deux points consécutifs quelconques par 1 mm dans une direction circonférentielle est égale ou inférieure à 0,4 $\mu$m/mm.

4.  Support d'enregistrement d'informations optique (2) selon l'une quelconque des revendications 1 à 3, dans lequel la longueur d'onde λ dudit faisceau laser est dans une plage allant de 380 à 430 nm et ledit faisceau laser, collecté par un objectif (12-1) avec une ouverture de 0,6 à 0,7, est irradié sur ledit support d'enregistrement d'informations optique.

5.  Support d'enregistrement d'informations optique (2) selon les revendications 1 à 4, dans lequel lesdites informations qui sont modulées par ETM (Modulation de huit à douze) sont enregistrées sur ledit support d'enregistrement d'informations optique.

6.  Appareil de reproduction d'informations optique (10) qui réalise la reproduction d'informations, comprenant :

    un support d'enregistrement d'informations optique selon l'une quelconque des revendications 1 à 5 ;
    une section de tête optique (12) configurée pour irradier ledit faisceau laser sur ledit support d'enregistrement d'informations optique (2) et pour générer un signal de reproduction à partir de la lumière réfléchie dudit support d'enregistrement d'informations optique (2) ;
    une section d'amplificateur (14) configurée pour amplifier ledit signal de reproduction ; et
    un moyen de limitation (16) pour limiter un changement dudit signal de reproduction dans une bande de l' ordre du kHz.

7.  Appareil de reproduction d'informations optique (10) selon la revendication 6, dans lequel ledit moyen de limitation comprend un filtre passe-haut (16) configuré pour filtrer un signal délivré en sortie par ladite section d'amplificateur, et une fréquence de coupure dudit filtre passe-haut est supérieure ou égale à 3 kHz et inférieure ou égale à 20 kHz.

# Fig. 1A

# Fig. 1B

LENGTH = $2\pi r$

SUBSTRATE

L1:RECORDING LAYER

THICKNESS d

SPACE LAYER

L0:RECORDING LAYER

SUBSTRATE

|0|1  |0|1

# Fig. 2

Ln:RECORDING LAYER

L3:RECORDING LAYER

L2:RECORDING LAYER

L1:RECORDING LAYER

L0:RECORDING LAYER

SUBSTRATE

SPACE LAYER

LASER BEAM

# Fig. 3

SUBSTRATE

L1:RECORDING LAYER

SPACE LAYER

L0:RECORDING LAYER

SUBSTRATE

L0:RECORDING

INTERLAYER CROSS TALK

12-1:OBJECTIVE LENS

# Fig. 4

2:MULTI-LAYERED OPTICAL
DATA RECORDING MEDIUM

10

18

| OPTICAL HEAD | → | PREAMP | → | HPF | → | DECODING CIRCUIT |

12

14

16

DOCED DATA
(1/0)

# F i g. 5 A

# F i g. 5 B

# F i g . 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P200377191 A
- JP P2003296978 A
- JP P2004220750 A
- US 20020060958 A1
- US 20040145999 A1
- EP 1132903 A2

**Non-patent literature cited in the description**

- Eight to Twelve Modulation Code for High Density Optical Disk. *the reproduction signal ISOM' 03 Technical Digest P,* 160-161